# EUROPEAN PATENT APPLICATION

(11) **EP 2 939 546 A1**
(43) Date of publication of application: **04.11.2015**
(21) Application number: 14425049.5
(22) Date of filing: 29.04.2014
(51) Int. Cl.: A23L 1/00, A23L 1/06, A23L 1/08, A23L 1/212, A23C 19/09, A23G 1/30

(54) **Kit of parts containing a cheese food product, and a natural food preparation**

(71) Applicant: Beretta, Marco, 20135 Milano (IT); Suardi, Paola, 20135 Milano (IT); Sofisti, Michele, 2013 Colombier (Milvignes) NE (CH)
(72) Inventor: Beretta, Marco, 20135 Milano (IT); Suardi, Paola, 20135 Milano (IT)
(74) Representative: Pontremoli, Guido

(57) **Abstract**

The present invention relates to a kit of parts comprising a solid three-dimensional piece made of cheese and, separately, a sweet, savoury or sweet and sour natural food preparation, for example based on fruit or vegetables.

## Description

The present invention relates to a kit of parts comprising at least a food product with a hollow three-dimensional shape made of cheese, and, separately, a natural food preparation based, for example, on fruit, vegetables or seeds.

### Background art

The pairing of cheese with sweet/sweet and sour preparations is one of the best known and renowned culinary combinations, widely appreciated and disseminated throughout the world. Typically, cheese is paired with fruit preserves or honey using the amounts of cheese or fruit preserve preferred by the consumer and obtaining a final more or less sweet flavour. In this regard it should be noted that said pairing, in order to be appreciated and give rise to an optimal sensory effect, requires the use of the right amount and variety of the savoury component (cheese) and sweet component (for example fruit preserve). Practically speaking, in fact, it is necessary to consider, on the one hand, the type of milk used to prepare the cheese and any aging of the latter, and, on the other hand, the amount of sugar and/or intensity of the flavour of the preparation it is desired to pair with it. Particular attention must be devoted to ensure that one of the two flavours does not overpower the other, thus becoming dominant and completely covering the other flavour. An improper sweet/savoury pairing can also provoke an effect that is opposite the desired one, i.e. the final flavour obtained is not very pleasing or is unnaturally altered. Another problem can be tied to the reproducibility of the final flavour given by the combinations of flavours, since at times it is difficult to dose the ingredients again in an exact and substantially unchanged manner.

The applicant has now found that it is possible to combine the right amounts of cheese and of a sweet, savoury or sweet and sour natural food preparation using a kit of parts, which separately comprises a hollow three-dimensional piece made of cheese, and a natural food preparation, preferably pre-dosed. In this manner, the two components can be simply and conveniently paired, making it possible to achieve the right sensory combinations and provide a particular practicality and reproducibility of use.

### Description of the figures

Figure 1a: embodiment of the present kit, in which the internal components are illustrated: 4 cheese elements in the shape of a hollow cube, and 4 snap-and-squeeze monodose sachets containing honey.
Figure 1b: final packaging of the kit of the invention shown in figure 1 a, with dimensions of approximately 8x8x2 cm, assembled and ready for use.
Figure 2: snap-and-squeeze monodose sachet, in which the natural food preparation of the present kit of parts is contained.
Figure 3: final product obtainable using the present kit, which illustrates the pairing of a hollow cubic piece with dimensions of approximately 2x2x2 cm and a chocolate-based cream.
Figure 4: kit of parts of the invention comprising 4 portions of cheese and a snap-and-squeeze sachet for the kit.

### Description of the invention

In a first aspect, the invention relates to a kit of parts comprising at least:
a food product in a hollow three-dimensional shape made of cheese; and separately
a natural food preparation, preferably honey or one derived from fruit, vegetables or seeds.
In a further aspect, the invention relates to the use of the present kit to prepare a food product, characterized in that it has a solid hollow piece made of cheese containing a natural food preparation.

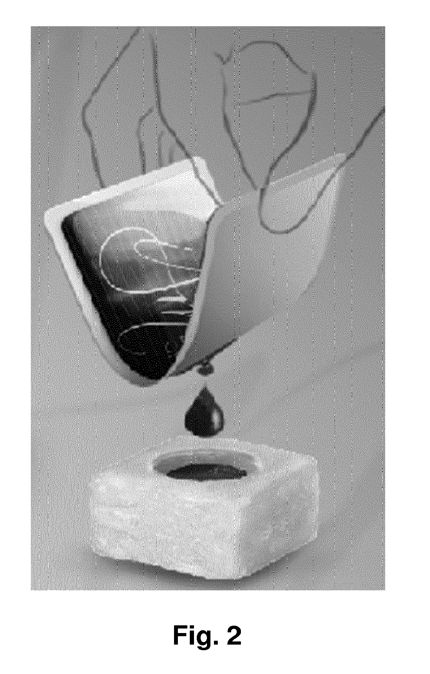

The present kit makes it possible to prepare a final product in which the cavity of the solid piece of cheese is completely or partially filled with the preferred natural food preparation contained in one or more special containers, as illustrated, for example, in figure 2. Thanks to the present kit, in fact, the user can combine the two food components to achieve a final product with excellent organoleptic and sensory properties, with a series of advantages as described below in detail.

The term "hollow three-dimensional piece" indicates a three-dimensional piece having at least one concavity, more or less deep, formed on at least one face. Thanks to its shape, the cheese of the present kit can be paired with a certain amount of the chosen natural food preparation, included in the present kit in at least one container, as described below in detail. Among the cheeses utilizable in the present invention, any type of cheese can be used, preferably a hard or semi-hard cheese, i.e. one having a consistency that enables the formation of at least one concavity for combining the food components of the present kit. "Hard cheeses" means cheeses having a low water content (for example less than 40%), whereas "semi-hard cheeses" means cheeses having a water content generally comprised between 40 and 45%. In either case, both aged and fresh cheeses can be used, irrespective of whether they are made from cow's, goat's or sheep's milk.

Preferred, non-limiting examples of cheeses that can be used in the present invention are: Emmenthal, Pecorino, Bra, Grana cheese, Parmigiano Reggiano, Asiago, Montasio, Provolone, Caciocavallo, Bettelmat, Gruyere, Toma, Valtellina Casera, Bitto, Fontina, Monte Veronese, Gorgonzola Verde and the like. In one particularly preferred embodiment, the cheese of the present kit is obtained by means of the process described in the co-pending Italian patent application No. MI2013A002121.

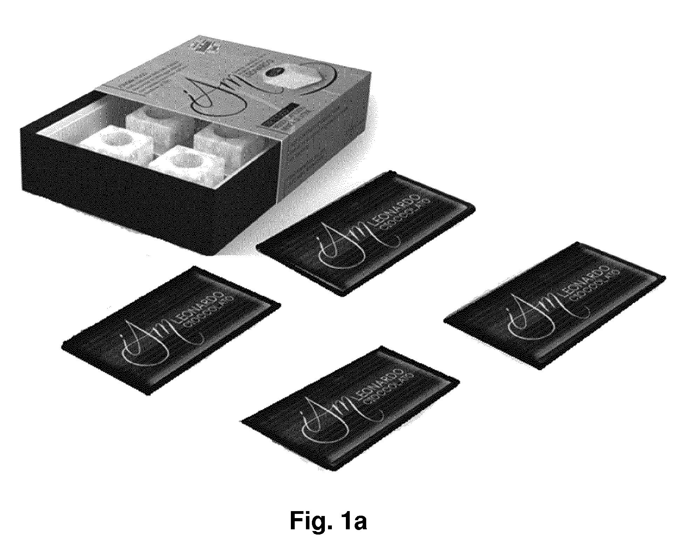

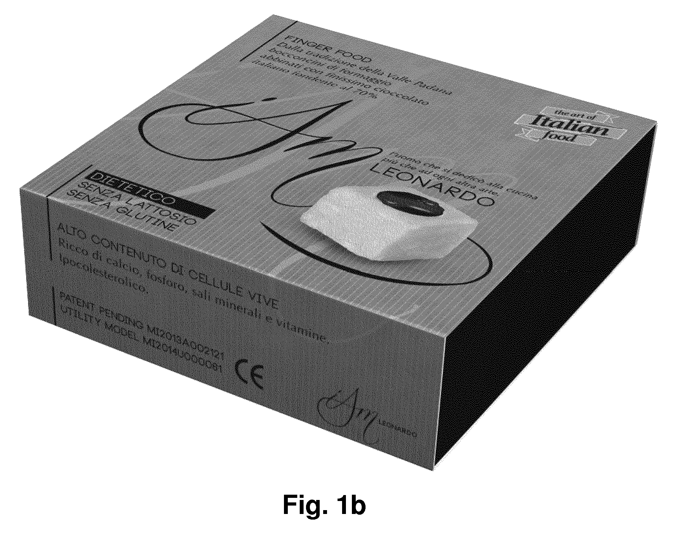

Preferably, the kit of parts of the invention comprises at least a hollow three-dimensional piece made of cheese having at least a partial or complete concavity. Said piece can be individually packaged or accommodated in special compartments of the kit, for example having the same shape as the three-dimensional piece made of cheese, as is apparent from the appended figure 1. In this case, the compartments containing the hollow pieces of cheese can be sealed, for example with a heat-sealed film, so as to maintain the freshness of the product and avoid any contact with one or more containers of the natural food preparation, or with the outside packaging of the kit itself.

"Partial concavity" is meant to indicate a cavity with a solid bottom, which can have a variable depth, and, for example, which can reach the centre of the piece, without involving the opposite face. "Complete concavity", on the other hand is meant to indicate a cavity that joins two opposite faces of the piece, thereby forming a sort of crown of cheese. The choice of the type of cavity can be made based on the intensity of the flavour of the selected cheese (for example, whether aged or not) or of the aroma of the selected natural food preparation, so that it may be convenient to have larger or smaller amounts of the natural food preparation to be combined to prepare the final product.

Non-limiting examples of preferred shapes of cheese to be used in the present kit can be: cube, parallelepiped, star, flower, heart, truncated cone, prism, sphere and the like, having at least one concavity.

In any case, the kit of the invention makes it possible to pair the selected cheese in the appropriate hollow three-dimensional shape with the most suitable natural food preparation, for example a sweet, sweet and sour, or savoury one, so as to obtain a wide range of flavours in a simple and reproducible manner. Solely by way of example, for kits of the invention containing cheeses with an intense flavour (such as aged cheeses), it may be preferable to use a sweet natural preparation, for example honey or chocolate cream. For cheeses with a more delicate flavour, on the other hand, a pairing with natural preparations with a savoury or sweet and sour flavour, for example containing hot red pepper, can prove to be optimal. Therefore, thanks to the possibility of combining different types and amounts of the two food components, the present kit enables the combination of flavours to be appreciated in a simple, practical manner, without any waste of raw materials.

The natural food preparation of the kit can be sweet, savoury or sweet and sour and can also be liquid, solid or, preferably, semi-solid. Preferred liquid preparations are: vinegar, preferably apple, balsamic or wine vinegar and the like.

In one embodiment, said preparation is obtained from fruit and/or vegetables. In this regard, the preferred preparations are selected from among: jams, preserves, compotes, mostarda and jelly, of fruit and/or vegetables. The terms "jam", "compote" and "preserve" comprise within their meaning any fruit and/or vegetable-based preparation (in pieces and/or homogenized) and sugar, which may or may not be cooked. As is well known, depending mainly on the sugar content, the percentage and form of the fruit or vegetables (i.e. in pieces or substantially homogeneous) and cooking times, such preparations are indicated in the art with the generic name of jam, compote or preserve. The term "mostarda", on the other hand, is meant to indicate, in general terms, a semi-solid preparation based on fruit or vegetables, sugar and mustard (as a general reference see: http://it.wikipedia.org/wiki/Mostarda). Non-limiting examples of preferred fruit are selected from among: oranges, lemons, cherries, strawberries, apricots, pears, plums, figs, exotic fruits in general, apples and the like. Preferred vegetables can be pumpkins, onions, celery, fennel, hot red pepper, tomatoes, horseradish, rhubarb and the like.

Natural preparations obtained from seeds are equally preferred. Particularly preferred are preparations of natural origin comprising white or dark, milk or plain or gianduia (hazelnut) chocolate, in solid or, preferably, creamy form; sauces or preparations obtained from seeds, preferably mustard.

In a further embodiment, said preparation is honey, either single-flower or multi-flower, generally known with the name of millefiori. Non-limiting examples of honey are: orange, millefiori, chestnut, lime and the like.

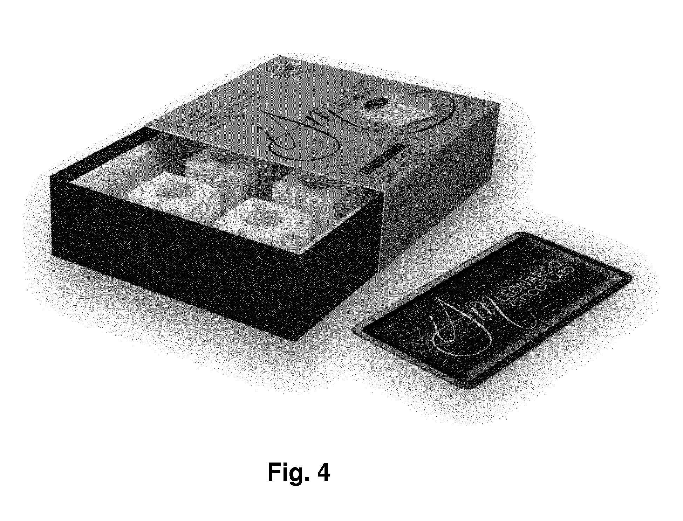

The present kit can comprise the sweet, savoury or sweet and sour natural food preparation packaged in at least one container, preferably sealed and/or reclosable or open. In one embodiment, said container is selected from among: vials, packages or thermoformed trays, bottles, tubes, rigid containers in general, or preferably tear-open or, preferably, snap-and-squeeze sachets. The container can contain an amount of natural food preparation comprised between about 2 mL and 40 mL. In one embodiment, the container is monodose, intended to be used for only one piece of cheese contained in the kit, or else it is usable for a single kit, containing, for example, 4 pieces of cheese. In this regard, the kit comprises at least one container having an amount of product comprised between about 2 mL and about 14 mL, even more preferably comprised between about 10 mL and 12 mL. In the case of monodose containers for one piece of cheese, the kit of the invention will be characterized in that it contains the same number of hollow pieces of cheese and monodose containers, of the same natural preparation or also a different one. Advantageously, in this manner it is possible to prepare kits having different combinations of the components, all highly reproducible and storable over time. In one equally preferred embodiment, the present kit comprises a container as defined here, for every 2 or every 4 pieces of cheese. In figure 4, on the other hand, the kit of the invention is represented as comprising a monodose container for a kit of 4 pieces of cheese.

Even more preferably, the natural food preparation of the invention is contained in at least one sealed snap-and-squeeze monodose sachet, for example of the Easysnap^{®} type (produced by Easypack solution SrL) as illustrated in figure 2.

Generally, the sachet has no air inside it, thus enabling prolonged storage of its contents. Moreover, the sachet proves to be particularly convenient from a practical viewpoint, as regards both disposal and use. The squeeze opening, in fact, makes it possible to measure out the flow of the natural preparation contained therein directly into the cavity of the cheese, without using additional means and without generating waste material deriving from breakage of the sachet, as in the case of tear-open containers. A further advantage of this type of preferred container lies in the fact that thanks to the control of the outflow during squeezing, the risk of spilling the contents outside the piece of cheese is considerably reduced, thus avoiding inconvenience for the end consumer.

If the natural food preparation to be paired with the cheese with the present kit is in a semisolid, non-drip form (for example jam or jelly), the present kit can also contain an additional component that the consumer can use for combining the food components of the kit. In this regard, said additional component is preferably an item of cutlery, a spoon, a plate, a spatula or a kitchen utensil having dimensions and characteristics in terms of shape and material that are suitable for being contained in the kit of the invention. For example, the kit can contain a compartment in which a hollow piece of cheese is accommodated, a compartment in which a sealed tray of fruit preserve is present, and a compartment accommodating a spatula that can be used to remove the fruit preserve from the tray and deposit it in the cavity of the cheese.

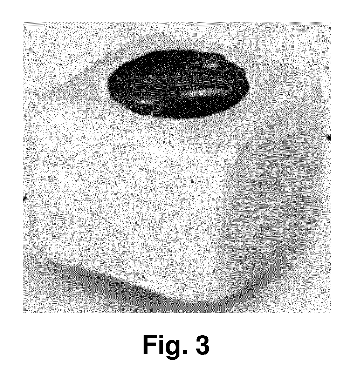

The kit of parts of the invention can be made using cellulosic material, typically cardboard, or also plastic or bioplastic material, preferably food-grade PET. In an equally preferred embodiment, the kit of the invention is made with recycled or recyclable material, so that a very low environmental impact is obtained. In this regard, in a further embodiment, the non-edible parts of the present kit are all made using the same type of material, even more preferably of cellulosic origin or food-grade PET. Disposal of the kit at the end of use is facilitated in this manner, since all of the residual components are disposed of with a single separate collection. The kit of the invention can be single-serving (i.e. containing one piece of cheese) or multi-serving, for example 2, 4, 6 or 8 servings, with combinations with the same or different natural preparations. A 4-serving embodiment, having dimensions of approximately 8x8x2cm is represented in figure 1 a. Advantageously, it is possible to obtain, store, transport and reproduce a vast range of food combinations, it being possible to combine, in a single kit, different types and hollow pieces of cheese and/or natural preparations, as described above in detail. The food components can be accommodated in the kit of the invention in separate containers or packaged individually in a single container. In other words, the kit can have separate compartments for accommodating the various components or it can have a single compartment containing cheese and a natural food preparation packaged individually, as illustrated, for example, in Fig. 1 b. As described here in detail, the present kit of parts allows a direct interaction between the food components contained therein, a necessary condition for the obtainment and reproducibility of the final food product, as represented, for example, in figure 3.

Thanks to the presence of the two separate components, moreover, it is possible to maintain the freshness and flavour of the foods also for a long time, unlike in cases where the final product is prepared and then packaged as a piece of cheese and natural preparation that are already combined.

The end user can therefore purchase the present kit and by keeping it under suitable conditions (for example, chilled in a refrigerator) he/she can combine the food components contained therein even a number of days after the purchase date, while maintaining their sensory properties.

The ease of use and reproducibility of the final product, together with the fact that no food is wasted, makes the invention applicable also on a large scale, for example through large-scale retailers.

The extreme versatility of the kit makes it possible, finally, to vary the number, doses and/or the types of food components so as to obtain sensory combinations tailored to different demands of the consumer and target market.

## Claims

1. A kit of parts comprising at least:
a food product with a hollow three-dimensional shape, made of cheese; and separately
a natural food preparation, preferably honey or one derived from fruit, vegetables or seeds.

2. The kit of parts according to claim 1, wherein said natural food preparation is selected from among: jam, compote, jelly or mostarda based on fruit or vegetables.

3. The kit of parts according to claim 1, wherein said natural food preparation is honey.

4. The kit of parts according to claim 1, wherein said natural food preparation is white or dark, milk, plain or gianduia chocolate in a solid or, preferably, creamy form.

5. The kit of parts according to the preceding claims, wherein said food product with a hollow three-dimensional shape is made with a hard or semi-hard cheese, preferably selected from among: Emmenthal, Pecorino, Bra, Grana cheese, Parmigiano Reggiano, Asiago, Montasio, Provolone, Caciocavallo, Bettelmat, Gruyere, Toma, Valtellina casera, Bitto, Fontina, Monte Veronese and Gorgonzola Verde, or obtained by means of the process of co-pending Italian patent application No. MI2013A002121.

6. The kit of parts according to the preceding claims, wherein said natural food preparation is contained in at least one sealed or open container, preferably selected from among: vials, packages or thermoformed trays, bottles, tubes, rigid containers in general, or, preferably, tear-open or snap-and-squeeze sachets.

7. The kit of parts according to claim 6, wherein said container is at least one sealed snap-and-squeeze sachet.

8. The kit of parts according to the preceding claims, wherein said container comprises from 2 mL to 40 mL of said natural food preparation.

9. The kit of parts according to the preceding claims, wherein said container comprises from 2 mL to 14 mL of said natural food preparation, preferably 10 to 12 mL.

10. The kit of parts according to claims 6-9, wherein said container is a monodose container for a piece of cheese or kit.

11. The kit of parts according to any one of the preceding claims, comprising the same number of hollow three-dimensional pieces made of cheese and of containers comprising the natural food preparation.

12. The kit of parts according to claims 1-10, comprising a container containing the natural food preparation for every 2 or 4 hollow three-dimensional pieces made of cheese.

13. The kit of parts according to any one of the preceding claims, further comprising: an item of cutlery, a spoon, a plate, a spatula or a kitchen utensil.

14. The kit of parts according to any one of the preceding claims, made of material of cellulosic origin or, preferably, of food-grade PET.

15. A use of the kit according to claims 1-14 to prepare a food product with a solid hollow shape, made of cheese, and containing a natural food preparation.
